(19) Europäisches Patentamt

European Patent Office

Office européen des brevets

(11) **EP 0 916 075 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(21) Anmeldenummer: **97936575.6**

(22) Anmeldetag: **30.07.1997**

(51) Int Cl.7: **G01D 5/20**

(86) Internationale Anmeldenummer:
**PCT/DE97/01611**

(87) Internationale Veröffentlichungsnummer:
**WO 98/004886 (05.02.1998 Gazette 1998/05)**

(54) **BERÜHRUNGSLOS ARBEITENDER WEGMESSENSOR**

NON-CONTACT POSITION SENSOR

DETECTEUR DE POSITION SANS CONTACT

(84) Benannte Vertragsstaaten:
**DE FR GB**

(30) Priorität: **30.07.1996 DE 19630657**

(43) Veröffentlichungstag der Anmeldung:
**19.05.1999 Patentblatt 1999/20**

(73) Patentinhaber: **Micro-Epsilon Messtechnik GmbH & Co. KG**
**94496 Ortenburg (DE)**

(72) Erfinder: **MEDNIKOV, Felix**
**Samara, 443096 (RU)**

(74) Vertreter: **Naumann, Ulrich, Dr.-Ing.**
**Patentanwälte,**
**Ullrich & Naumann,**
**Luisenstrasse 14**
**69115 Heidelberg (DE)**

(56) Entgegenhaltungen:
**EP-A- 0 339 759**          **WO-A-88/06716**
**WO-A-94/03778**          **DE-A- 2 261 379**
**DE-A- 3 424 461**          **DE-A- 4 128 159**

**Beschreibung**

Die Erfindung betrifft einen berührungslos arbeitenden Wegmesssensor mit einer mit Wechselstrom beaufschlagbaren Messspule, wobei die Messspule mindestens zwei Spannungsabgriffe aufweist, mit einem elektrisch und/oder magnetisch leitenden Messobjekt und mit einer Auswerteschaltung zum Auswerten und Ermitteln einer der Position des Messobjekts in Bezug auf die Spannungsabgriffe entsprechenden Ausgangsspannung, wobei das Messobjekt im Inneren der Messspule angeordnet und verschiebbar ist und die Gesamtimpedanz der Messspule unabhängig von der Position des Messobjekts ist.

Ein berührungslos arbeitender Wegmesssensor der in Rede stehenden Art ist bereits in der internationalen Patentanmeldung PCT/DE 93/00703 (WO-A1-94-3778) beschrieben. Die Messspule des bekannten Sensors weist mehrere in definierten Abständen angeordnete Spannungsabgriffe auf und ist in einem Gehäuse gekapselt. Als Messobjekt dient ein Ring, der das Gehäuse mit Abstand umgreift und entlang der Gehäusewandung verschiebbar ist. Mit Hilfe des bekannten Wegmesssensors kann die Position des Ringes in Bezug auf die an der Messspule angeordneten Spannungsabgriffe bestimmt werden. Die Anwesenheit des Rings zwischen zwei Spannungsabgriffen wirkt sich auf die Impedanz des zwischen diesen Spannungsabgriffen liegenden Abschnitts der Messspule aus und auf alle "Teil"-Impedanzen der sich in einer Richtung anschließenden Abschnitte der Messspule. Je nach dem, an welcher Stelle der Messspule sich der Ring befindet, werden unterschiedlich viele Teilimpedanzen beeinflusst. Bei dem bekannten Wegmesssensor werden nun die an aufeinanderfolgenden Abschnitten der Messspule abgreifbaren Spannungen aufaddiert, wobei jeweils Zwischensummen gebildet werden, die sich in der steigenden Anzahl der berücksichtigten Spannungswerte unterscheiden. Diese Zwischensummen werden dann abermals zu einer Ausgangsspannung aufaddiert, die sich eindeutig zur Position des Rings in Beziehung setzen lässt.

Das Messobjekt des bekannten Wegmesssensors befindet sich außerhalb des Spulengehäuses. Dadurch bedingt ist das Messobjekt relativ exponiert und ungeschützt. Außerdem benötigt der bekannte Wegmesssensor relativ viel Raum, um eine Beweglichkeit des Messobjekts an der Außenseite des Spulengehäuses zu gewährleisten.

Weiterhin ist aus der WO 94/03778 ebenfalls ein berührungslos arbeitender Wegmesssensor bekannt, bei dem ein Mittel zur Temperaturkompensation vorgesehen ist. Auch dort ist eine Gleichspannungs- und eine Wechselspannungsquelle vorgesehen, wobei über die Beschaltung der beiden Spannungsquellen nichts ausgesagt ist. Üblicherweise wird der Durchschnittsfachmann derart vorgehen, dass er die beiden Spannungsquellen in Serie schaltet. Das Parallelschalten einer Wechselspannungsquelle und einer Gleichspannungsquelle ist hingegen sehr ungewöhnlich, da die beiden Spannungsquellen gegeneinander arbeiten.

In Verbindung mit Fig.1a der WO-Druckschrift ist ein Wegmesssensor mit einer Messspule beschrieben, der über zwei Anschlüsse mit Wechselspannung versorgt wird. Als Messobjekte dienen ferromagnetische Kugeln, die im Innern der Messspule angeordnet und verschiebbar sind. Über die Länge bzw. den Umfang der Messspule verteilt sind drei Spannungsabgriffe angeordnet. Mit Hilfe einer Auswerteschaltung läßt sich die Position der Kugeln in Bezug auf die Spannungsabgriffe ermitteln, da die Impedanz des jeweiligen Messspulenabschnitts zwischen zwei Spannungsabgriffen durch die Anwesenheit der Kugeln in diesem Abschnitt erhöht wird. Die Gesamtimpedanz der Messspule verändert sich dabei nicht.

In der Praxis hat sich gezeigt, dass mit dem bekannten Wegmesssensor keine optimale Wegmessung erzielbar ist.

Der Erfindung liegt daher die Aufgabe zugrunde, die Beschaltung, d.h. die eingangsseitige Stromversorgung und die ausgangsseitige Auswerteschaltung, eines Wegmesssensors der hier in Rede stehenden Art so zu optimieren, dass verbesserte Wegmessergebnisse erzielbar sind.

Der erfindungsgemäße, berührungslos arbeitende Wegmesssensor löst die voranstehende Aufgabe durch die Merkmale des Patentanspruchs 1. Danach ist der erfindungsgemäße Wegmesssensor dadurch gekennzeichnet, dass Wechselstromquellen die Messspule speisen und die Wechselstromquellen durch eine Wechselspannungsquelle und nachgeschaltete Widerstände realisiert sind.

Erfindungsgemäß ist erkannt worden, dass sich die Teilimpedanzen der einzelnen Abschnitte der Messspule nicht nur über einen die Messspule umgreifenden Ring als Messobjekt beeinflussen lassen, sondern auch über ein im Inneren der Spule geführtes Messobjekt aus einem elektrisch und/oder magnetisch leitenden Material. Bei dieser Anordnung kann das Messobjekt gezielt bestimmten zu erfassenden Kräften oder Drücken ausgesetzt werden, während es gegen andere unerwünschte Einflüsse abgeschirmt ist. Außerdem führt die Anordnung des Messobjekts im Inneren der Messspule zu einem äußerst kompakten Sensoraufbau. Bei dem erfindungsgemäßen Wegmesssensor ist die Gesamtimpedanz der Messspule unabhängig von der Position des Messobjekts, so dass der durch die Messspule fließende Strom nur von der anliegenden Spannung und nicht von der Position des Messobjekts abhängt. Dementsprechend ist die Ausgangsspannung des erfindungsgemäßen Wegmesssensors im Idealfall auch nur von der Position des Messobjekts abhängig.

Des Weiteren ist erkannt worden, dass die Empfindlichkeit eines Wegmesssensors der hier in Rede stehenden Art in bestimmten Bereichen, z.B. in Randbereichen, erhöht werden kann, wenn die Messspule mit Wechselstrom gespeist wird. Die Stromquellen werden erfindungsgemäß durch Spannungsquellen und diesen nachgeschaltete Widerstände realisiert.

Im Hinblick auf eine einfache Auswertung der Ausgangsspannung ist es von besonderem Vorteil, wenn die Positionen der Spannungsabgriffe so gewählt sind, dass bei Abwesenheit des Messobjekts zwischen zwei benachbarten Spannungsabgriffen immer im wesentlichen die gleiche Spannung abgreifbar ist. Im Falle einer Messspule mit über ihrer Länge konstantem Spulenquerschnitt und gleichförmigen Spulenwicklungen führt dies zu einer äquidistanten Anordnung der Spannungsabgriffe.

Im Hinblick auf eine einfache und zuverlässige Auswertung der Ausgangsspannung sollte die Dimensionierung des Messobjekts außerdem auch auf den Abstand zwischen zwei benachbarten Spannungsabgriffen abgestimmt sein. Das Messobjekt sollte sich nämlich in vorteilhafter Weise maximal über den Abstand zwischen zwei benachbarten Spannungsabschnitten erstrecken, damit es einfach zwischen zwei Spannungsabgriffen lokalisiert werden kann.

Als vorteilhafte Materialien für das Messobjekt kommen sämtliche aus der Praxis bekannten Werkstoffe in Frage, mit denen Spulenkerne realisiert werden. Insbesondere geeignet sind ferromagnetische Werkstoffe und Werkstoffe mit einem geringen spezifischen elektrischen Widerstand.

Der erfindungsgemäße Wegmesssensor kann je nach Einsatzgebiet mit unterschiedlichen Messspulen, d.h. mit unterschiedlichen Spulengeometrien, realisiert werden. So könnte bspw. eine Langspule in Form einer Zylinderspule oder einer Spule mit eckigem Querschnitt als Messspule verwendet werden. Genauso möglich wäre aber auch der Einsatz einer Toroidspule als Messspule.

In einer vorteilhaften Ausführungsform des erfindungsgemäßen Wegmesssensors ist im Inneren der Messspule ein sich vorzugsweise über die gesamte Länge der Messspule erstreckendes Spulenrohr angeordnet, in dem wiederum das Messobjekt angeordnet und verschiebbar ist. Das Spulenrohr dient zum einen zur Stabilisierung der Messspule, da die Messspule praktisch um das Spulenrohr gewickelt werden kann, und zum anderen auch als Führung für die Bewegung des Messobjekts. Dadurch kann in wirkungsvoller Weise die mechanische Beanspruchung der Messspule durch das Messobjekt reduziert werden. Das Spulenrohr sollte aus einem Material hergestellt sein, das eine elektrische Isolation zwischen der Messspule und dem Messobjekt gewährleistet. Es sollte sich daher um einen nicht ferromagnetischen Werkstoff mit einem hohen spezifischen elektrischen Widerstand handeln. In Frage kommt hier rostfreier Stahl mit entsprechenden Eigenschaften aber auch Kunststoff oder Glas.

Der erfindungsgemäße Wegmesssensor kann je nach Anwendungsfall mit-einem Gehäuse versehen sein, das entweder nur die Messspule mit dem Messobjekt kapselt und in vorteilhafter Weise auch gegen Störeinflüsse abschirmt, oder zusätzlich auch noch die Ausschaltung einschließt und schützt.

Ebenfalls im Hinblick auf eine einfache Auswertung der Ausgangsspannung des erfindungsgemäßen Wegmesssensors sollte die Messspule symmetrisch und gegensinnig mit Wechselspannung gespeist werden. Als Wechselspannung kann beispielsweise eine Sinusspannung oder auch eine Rechteckspannung angelegt werden.

Grundsätzlich kann die Ausgangsspannung auf drei verschiedenen Wegen ermittelt werden.

Eine erste Möglichkeit besteht darin, jeweils die Spannung zwischen zwei benachbarten Spannungsabgriffen der Messspule zu erfassen. Diese Spannungswerte müssen dann in der durch die Anordnung der entsprechenden Spulenabschnitte vorgegebenen Reihenfolge aufaddiert werden, und zwar zunächst zu allen möglichen sich bei dieser Reihenfolge ergebenden Zwischensummen. Die Ausgangsspannung ergibt sich dann als Summe dieser Zwischensummen. Bei dieser Vorgehensweise werden also lediglich die zwischen benachbarten Spannungsabgriffen abgreifbaren Spannungen erfasst, d.h. gemessen. Mit Hilfe der Auswerteschaltung wird dann aus diesen Spannungswerten die Ausgangsspannung berechnet, und erst durch Auswertung der so berechneten Ausgangsspannung kann die Position des Messobjekts bestimmt werden.

In einer zweiten Variante des erfindungsgemäßen Wegmesssensors werden jeweils die Spannungen zwischen den einzelnen Spannungsabgriffen und einem Referenzpotential erfasst, was den vorab erläuterten Zwischensummen entspricht. Mit Hilfe der Auswerteschaltung werden diese erfassten, also gemessenen Spannungswerte dann zu der Ausgangsspannung aufaddiert. Das Aufaddieren kann in vorteilhafter Weise mit Hilfe eines summierenden Verstärkers erfolgen, der vorzugsweise einen invertierenden und einen nicht invertierenden Eingang aufweist.

Schließlich können die einzelnen Spannungsabgriffe des erfindungsgemäßen Wegmesssensors auch an einem gemeinsamen Messwertabgriff zusammengeführt sein. An diesem gemeinsamen Messwertabgriff ist dann die Ausgangsspannung abgreifbar. Hier wird die Ausgangsspannung also schaltungstechnisch realisiert und direkt gemessen. Die Auswerteschaltung dient hier tatsächlich nur zum Auswerten und nicht zum Ermitteln der Ausgangsspannung.

Werden die einzelnen Spannungsabgriffe nun an einem gemeinsamen Messwertabgriff zusammengeführt, so ist es vorteilhaft, wenn zwischen die einzelnen Spannungsabgriffe und den gemeinsamen Messwertabgriff jeweils mindestens ein Widerstand geschaltet ist. Es könnte sich dabei entweder um Widerstände mit im wesentlichen identischem Nennwert oder auch um Widerstände mit unterschiedlichen Nennwerten handeln.

Zur Vereinfachung der Auswertung der Ausgangsspannung ist jedoch die Verwendung von Widerständen mit identischem Nennwert vorzuziehen. In diesem Zusammenhang ist es auch vorteilhaft, wenn die Widerstände einen Nennwert aufweisen, der um etwa zwei Ordnungen höher liegt als der Ausgangswiderstand der Messspule.

Da die Impedanz der Messspule in der Regel temperaturabhängig ist und damit auch die Teilimpedanzen temperaturabhängig sind, wirken sich Temperaturschwankungen in der Regel auch auf das Ausgangssignal bzw. die Ausgangsspannung des erfindungsgemäßen Wegmesssensors aus, was zu Messfehlern führen kann. In einer besonders vorteilhaften Variante des erfindungsgemäßen Wegmesssensors sind daher Mittel zur Kompensation von Temperatureinflüssen vorgesehen.

Um nun den Temperatureinfluss auf die Ausgangsspannung des Wegmesssensors zu ermitteln, ist es vorteilhaft, die Messspule nicht nur mit einer Wechselspannung, sondern zusätzlich noch mit einer Gleichspannung zu speisen, d.h. der Wechselspannungskomponente der Ausgangsspannung eine Gleichspannungskomponente zu überlagern. Die Position des Messobjekts wirkt sich lediglich auf die Wechselspannungskomponente, nicht aber auf die Gleichspannungskomponente aus. Dementsprechend kann durch Separierung der Gleichspannungskomponente der Ausgangsspannung der Temperatureinfluss auf die Wechselspannungskomponente der Ausgangsspannung ermittelt werden. Anschließend kann dann dieser Temperatureinfluss kompensiert werden.

Um auch die Temperaturcharakteristik der Messspule insgesamt berücksichtigen zu können, ist es vorteilhaft, wenn die Auswerteschaltung auch Mittel zur Temperaturerfassung umfasst. Dazu kann z.B. ein temperaturabhängiger Gleichstrom- oder Wechselstromwiderstand bestimmt werden. Bspw. mit Hilfe eines Mikroprozessors, in dem das Temperaturverhalten der Messspule abgespeichert ist, kann dann die Temperaturcharakteristik der Messspule berücksichtigt werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung werden auch im allgemeinen bevorzugte Ausgestaltungen und Weiterbildungen der Lehre erläutert. In der Zeichnung zeigt

Fig. 1 in schematischer Darstellung einen erfindungsgemäßen Wegmesssensors,

Fig. 2 ein erstes Schema zur Erläuterung der unterschiedlichen Abgriffs- und Auswertungsvarianten,

Fig. 3 ein zweites Schema zur Erläuterung einer Messwertauswertung durch das Aufsummieren von Strömen,

Fig.4 den in Figur 1 dargestellten Wegmesssensor mit einem die Einzelspannungen summierenden Verstärker,

Fig. 5 den in Figur 1 dargestellten Wegmesssensor, bei dem die Ströme aufsummiert werden,

Fig. 6 ein dem in Fig. 4 dargestellten Wegmesssensor entsprechender Wegmesssensor, der zusätzlich mit Mitteln zur Temperaturkompensation ausgestattet ist, und

Fig. 7 eine weitere konstruktive Variante für einen erfindungsgemäßen Wegmesssensor.

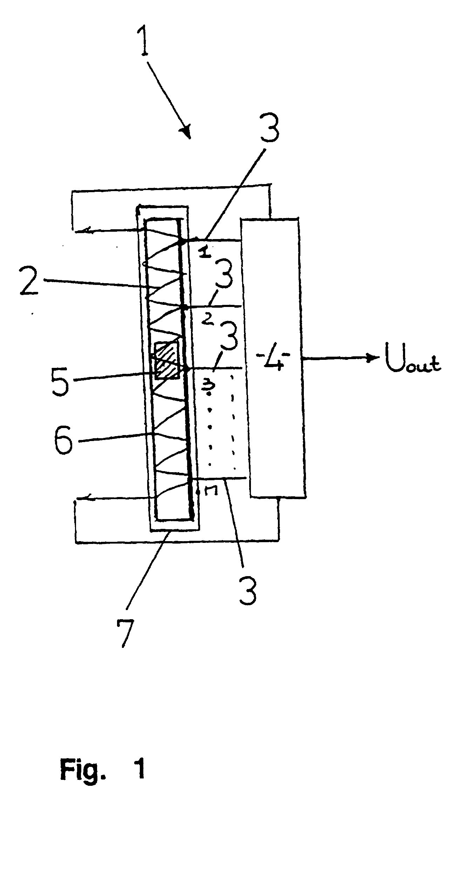

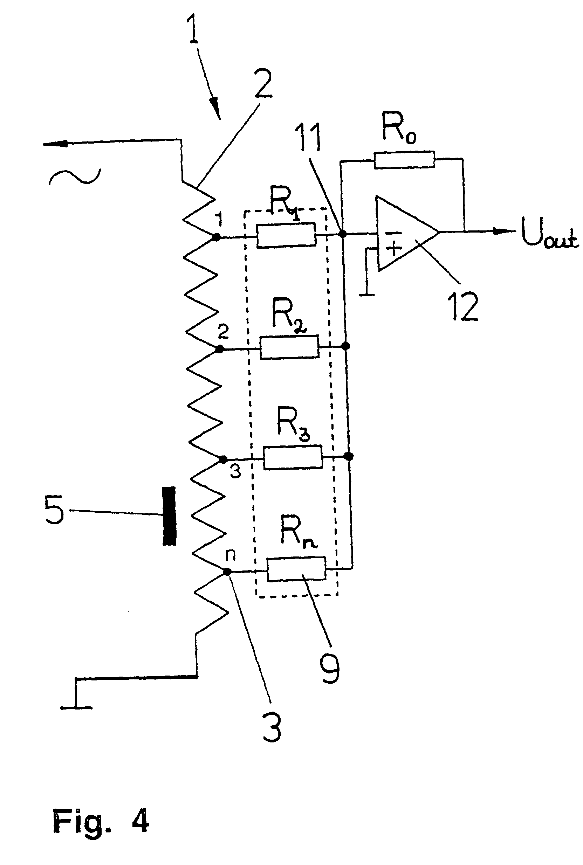

In Fig. 1 ist ein Wegmesssensor 1 mit einer Messspule 2 dargestellt, wobei die Messspule 2 mit Wechselstrom beaufschlagbar ist. An der Messspule 2 sind mindestens zwei Spannungsabgriffe 3 vorgesehen. Da je nach Anwendung des Wegmesssensors 1 eine beliebige Anzahl von Spannungsabgriffen 3 vorgesehen sein kann, sind in Fig. 11, 2, 3, ... n Spannungsabgriffe 3 angedeutet. Die Spannungsabgriffe 3 werden einer Auswerteschaltung 4 zugeführt. Über die Auswerteschaltung 4 erfolgt in dem hier dargestellten Ausführungsbeispiel auch die Spannungsversorgung der Messspule 2. Der dargestellte Wegmesssensor 1 umfasst ferner noch ein Messobjekt 5. Das Messobjekt 5 ist im Inneren der Messspule 2 angeordnet und innerhalb der Messspule 2 verschiebbar. Die Messspule 2 ist derart konzipiert, dass ihre Gesamtimpedanz unabhängig von der Position des Messobjekts 5 ist. Die Anwesenheit des Messobjekts 5 in einem der durch die Spannungsabgriffe 3 definierten Abschnitte der Messspule 2 beeinflusst aber die Teilimpedanzen des entsprechenden Spulenabschnitts und der sich in einer Richtung daran anschließenden Spulenabschnitte. Mit Hilfe der Auswerteschaltung 4 lässt sich daher die Position des Messobjekts 5 bezüglich der Spannungsabgriffe 3 bestimmen. Einzelheiten der Messwertauswertung werden in Verbindung mit Fig. 4 näher erläutert.

Bei der in Fig. 1 dargestellten Messspule 2 handelt es sich um eine Langspule, nämlich um eine Zylinderspule mit gleichmäßigen Wicklungen. Die Positionen der Spannungsabgriffe 3 sind hier so gewählt, dass bei Abwesenheit des Messobjekts 5 zwischen zwei benachbarten Spannungsabgriffen 3 immer im wesentlichen die gleiche Spannung abgreifbar ist. Dazu sind die Spannungsabgriffe 3 im wesentlichen äquidistant angeordnet.

Das Messobjekt 5 ist hier so dimensioniert, dass es sich maximal über den Abstand zwischen zwei benachbarten Spannungsabgriffen 3 erstreckt. Da es sich auf die Teilimpedanzen der jeweiligen Abschnitte der Messspule 2 auswirken soll, ist das Messobjekt 5 aus einem ferromagnetischen Werkstoff oder aus einem Werkstoff mit einem geringen spezifischen elektrischen Widerstand gebildet.

Die Messspule 2 ist hier um ein Spulenrohr 6 gewickelt. Im Inneren des Spulenrohrs 6 befindet sich das Messobjekt 5. Damit nun die Funktionsfähigkeit des Wegmesssensors 1 nicht gestört wird, ist das Spulenrohr 6 aus einem nicht ferromagnetischen Werkstoff mit einem hohen spezifischen elektrischen Widerstand gebildet. Dabei könnte es sich um einen rostfreien Stahl mit entsprechenden Eigenschaften handeln. Als Spulenrohr 6 könnte aber auch ein Kunststoff- oder Glasrohr dienen.

Schließlich umfasst der in Fig. 1 dargestellte Wegmesssensor 1 noch ein Gehäuse 7, das lediglich die Messspule 2 mit dem Spulenrohr 6 und dem Messobjekt 5 umfasst. Aus dem Gehäuse 7 herausgeführt sind einerseits die Anschlüsse an die Versorgungs- und Auswerteschaltung 4 und andererseits die Spannungsabgriffe 3. In einer vorteilhaften Variante des dargestellten Wegmesssensors 1 könnte das Gehäuse 7 auch die Auswerteschaltung 4 mit sämtlichen Zuleitungen einschließen.

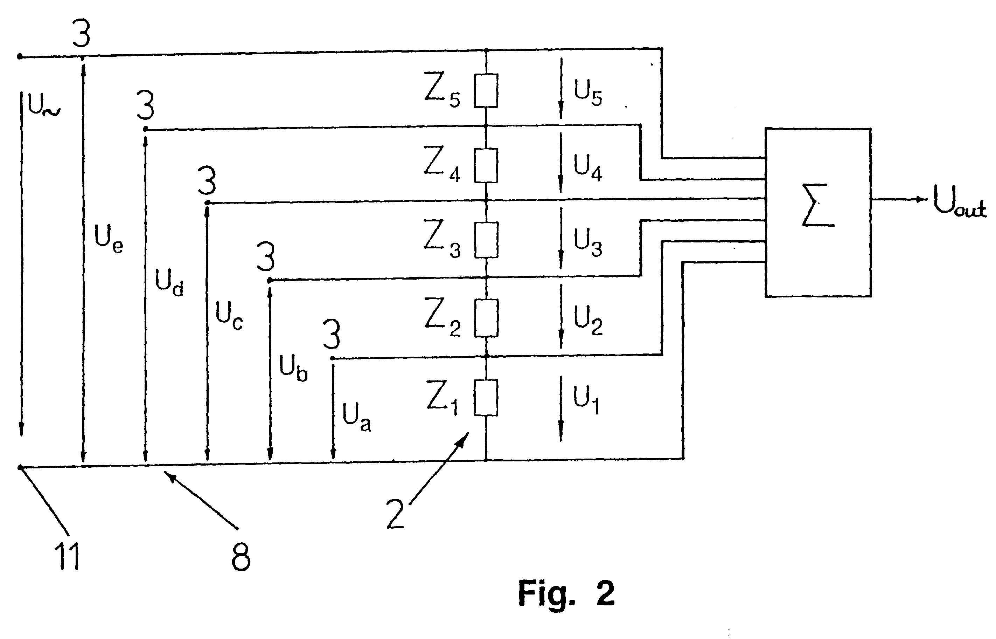

Die Auswertung der von dem in Fig. 1 dargestellten Wegmesssensor erfassten Spannungswerte wird nachfolgend anhand von Fig. 2 näher erläutert.

Im linken Teil der Fig. 2 ist die Messspule 2 schematisch als eine Reihenschaltung von Impedanzen $Z_1$ bis - hier beispielhaft - $Z_5$ dargestellt. Diese Impedanzen $Z_1$ bis $Z_5$ entsprechen den Teilimpedanzen der zwischen den Spannungsabgriffen 3 liegenden Abschnitte der Messspule 2. Die Messspule 2 wird von einer Wechselspannung $U_\sim$ gespeist.

Die Spannungen $U_1$ bis $U_5$ entsprechen den Spannungen, die jeweils zwischen benachbarten Spannungsabgriffen 3 erfassbar sind, also den über den Impedanzen $Z_1$ bis $Z_5$ abfallenden Spannungen $U_1$ bis $U_5$. Je nach der schaltungstechnischen Realisierung können auch die in aufsteigender Reihenfolge aufsummierten Spannungen $U_1$ bis $U_5$, in Form der Zwischensummen $U_a$ bis $U_e$ abgegriffen werden, wobei

$$U_a = U_1$$

$$U_b = U_1 + U_2$$

$$U_c = U_1 + U_2 + U_3$$

$$U_d = U_1 + U_2 + U_3 + U_4$$

und

$$U_e = U_1 + U_2 + U3 + U4 + U5.$$

Diese Zwischensummen $U_a$ bis $U_e$ werden dann abermals aufaddiert zu der Ausgangsspannung, die nachfolgend als $U_{out}$ bezeichnet wird.

$$U_{out} = U_a + U_b + U_c + U_d + U_e \qquad (1)$$

oder

$$U_{out} = U_1 + 2U_2 + 3U_3 + 4U_4 + 5U_5 \qquad (2)$$

Zur Bestimmung der Ausgangsspannung $U_{out}$ stehen also zwei Vorgehensvarianten zur Verfügung:

Variante 1: Die abgegriffenen Spannungswerte $U_a$, $U_b$, $U_c$, $U_d$, $U_e$ werden von einem Addierer zu einer Gesamtspannung - der Ausgangsspannung $U_{out}$ - aufaddiert (Gleichung (1)).

Variante 2: Die zwischen den Spannungsabgriffen 3 erfassten Einzelspannungen $U_1$, $U_2$, $U_3$, $U_4$, $U_5$ werden entsprechend der Gleichung (2) gewichtet mit einem Addierer zu der Ausgangsspannung $U_{out}$ aufaddiert.

Bei beiden Varianten kann die Addition der Spannungen mit der in Fig. 1 dargestellten Auswerteschaltung 4 sowohl analog als auch digital ausgeführt werden.

Je nach dem, an welcher Position sich das Messobjekt 5 befindet, werden jeweils nur bestimmte Impedanzen der Impedanzen $Z_1$ bis $Z_5$ beeinflusst. Befindet sich das Messobjekt 5 bspw. im Bereich des ersten Abschnitts der Messspule 2, so werden alle Impedanzen $Z_1$ bis $Z_5$ beeinflusst. Befindet sich das Messobjekt 5 hingegen im Bereich des mittleren, dritten Abschnitts der Messspule 2, so werden lediglich die Impedanzen $Z_3$ bis $Z_5$ beeinflusst. Wie aus Gleichung (2) folgt, hat $Z_2$ den doppelten Einfluss auf die Ausgangsspannung $U_{out}$ wie $Z_1$, $Z_3$ den dreifachen Einfluss usw.. Entsprechend wirkt sich die Position des Messobjekts 5 nicht nur auf die betroffenen Impedanzen aus sondern auch auf die Zwischensummen $U_a$ bis $U_e$ und letztlich auf die Ausgangsspannung $U_{out}$. Daher lässt sich die Ausgangsspannung $U_{out}$ eindeutig einer Position des Messobjekts 5 bezüglich der Spannungsabgriffe 3 zuordnen.

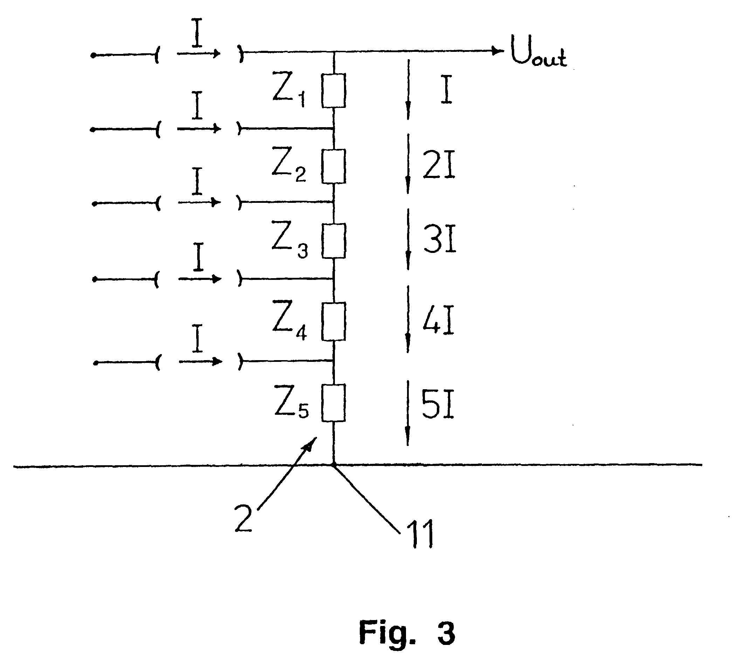

Fig. 3 zeigt ein zweites Schema zur Erläuterung der Auswertevarianten. Hier wird die Messspule 2 - ähnlich wie in Fig. 2 - schematisch als Reihenschaltung von Impedanzen $Z_1$ bis $Z_5$ dargestellt. Die Messspule 2 wird von fünf Wechselstromquellen gespeist. Deshalb fließt über die Impedanz $Z_1$ ein Strom I, über die Impe-

danz $Z_2$ ein Strom 2I, über die Impedanz $Z_3$ ein Strom 3I, über die Impedanz $Z_4$ ein Strom 4I und über die Impedanz $Z_5$ ein Strom 5I. Bei diesem Schema werden die Ströme I direkt in der Messspule 2 addiert. Ausgangssignal ist:

$$U_{out} = I\,(Z_1 + 2Z_2 + 3Z_3 + 4Z_4 + 5Z_5) \qquad (3)$$

Fig. 4 zeigt eine Variante der Messwerterfassung im Rahmen eines Wegmesssensors 1 mit einer mit Wechselspannung beaufschlagbaren Messspule 2, wobei die Messspule 2 mehrere Spannungsabgriffe 3 aufweist und im Inneren der Messspule 2 das Messobjekt 5 angeordnet ist. Die Addition der Spannungswerte erfolgt hier mit Hilfe eines Addierers. Die einzelnen Spannungsabgriffe 3 werden über Widerstände 9 ($R_1$ bis $R_n$) und einen Knotenpunkt 11 an den invertierenden Eingang eines Differentialverstärkers 12 geführt. Das Potential des invertierenden Eingangs des Differentialverstärkers 12 ist "0", während der nicht invertierende Eingang auf Erde liegt. Dies bedeutet, dass die abgegriffenen Spannungswerte unabhängig voneinander addiert werden können. Parallel zum invertierenden Eingang und Ausgang des Differentialverstärkers 12 ist ein Widerstand $R_0$ geschaltet. Wenn alle Widerstände 9 ($R_1$ bis $R_n$) gleich sind ($R_1=R_2=...=R_n$), ergibt sich der Verstärkungsfaktor K des Differentialverstärkers 12 als:

$$K = \frac{R_0}{R}.$$

Für die durch den Differentialverstärker 12 verstärkte Ausgangsspannung $U_{out}$ gilt dann

$$U_{out} = -\frac{U_\sim}{Z} + K \sum_{i=1}^{n} i \cdot Z_i \; ,$$

wobei $U_\sim$ die an der Messspule 2 anliegende Wechselspannung und Z die Gesamtimpedanz der Messspule 2 ist.

Die Widerstände 9 ($R_1$ bis $R_n$) können auch unterschiedliche Nennwerte aufweisen. Dadurch kann die Empfindlichkeit des Wegmesssensors in bestimmten Bereichen, z.B. in den Randbereichen, erhöht werden.

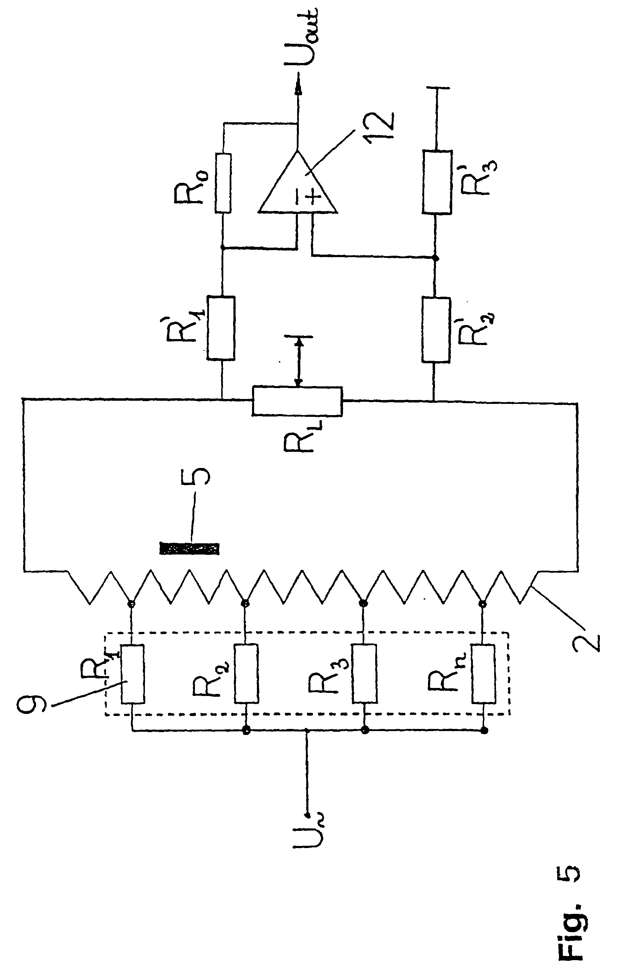

Entsprechend dem in Fig. 3 dargestellten Auswerteschema werden die einzelnen Abschnitte der Messspule 2 bei dem in Fig. 5 dargestellten Ausführungsbeispiel eines erfindungsgemäßen Wegmesssensors jeweils mit einem bestimmten Strom I gespeist. Die entsprechenden Stromquellen werden durch eine Spannungsquelle $U_\sim$ und Widerstände $R_1$ bis $R_n$ realisiert, wobei

$$R_1 = R_2 = ... = R_n \gg Z_1 = Z_2 = ... = Z_n.$$

Die Messspule 2 wird an den invertierenden und an den nicht invertierenden Eingang des Differentialverstärkers 12 angeschlossen. Mit einem zwischengeschalteten Lastpotentiometer $R_L$ kann der Nullpunkt am Ausgang des Differentialverstärkers 12 eingestellt werden, wenn sich das Messobjekt 5 in der Mitte der Messspule 2 befindet. Wird das Messobjekt 5 aus der Mittellage ausgelenkt, so ändert sich die Ausgangsspannung $U_{out}$ proportional und die Phase ändert sich um 180°.

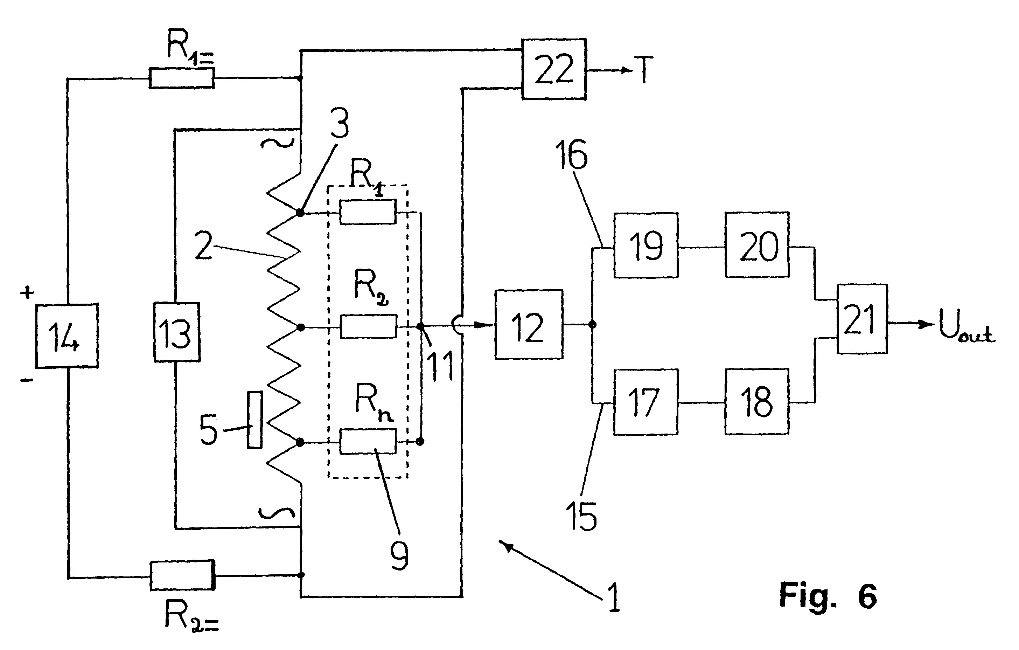

Fig. 6 zeigt einen Wegmesssensor 1, der im wesentlichen wie der in Fig. 4 dargestellte Wegmesssensor aufgebaut ist, wobei hier allerdings die Auswerteschaltung durch Mittel zur Temperaturkompensation ergänzt ist. Dazu ist die Messspule 2 nicht nur an eine Wechselspannungsquelle 13 angeschlossen, sondern auch - über Widerstände $R_{1=}$ und $R_{2=}$ - an eine Gleichspannungsquelle 14. Dementsprechend wird dem Verstärker 12 ein Ausgangssignal bzw. eine Ausgangsspannung zugeführt, in der sich eine Wechselstromkomponente und eine Gleichstromkomponente überlagern. Die Gleichstromkomponente ist unabhängig von der Position des Messobjekts 5, hängt aber - genauso wie die Wechselstromkomponente - von der Temperatur ab.

Das über den Verstärker 12 verstärkte Ausgangssignal wird nun auf zwei Kanäle 15 und 16 aufgespalten. Im Kanal 15 wird mit Hilfe eines Niederfrequenzfilters 17 und eines nachgeschalteten Gleichstromverstärkers 18 die Gleichstromkomponente des Ausgangssignals ermittelt. Im Kanal 16 wird mit Hilfe eines Demodulators 19 und eines nachgeschalteten Filters und ggf. Verstärkers 20 die Wechselstromkomponente des Ausgangssignals ermittelt. Da die Gleichstromkomponente lediglich der Temperaturbeeinflussung unterliegt und die Wechselstromkomponente sowohl von der Temperatur als auch von der Position des Messobjekts 5 abhängig ist, kann nun mit Hilfe der Gleichstromkomponente die Temperaturbeeinflussung der Wechselstromkomponente kompensiert werden, wozu die beiden Kanäle 15 und 16 in dem Endverstärker 21 zusammengeführt und verrechnet werden. Am Ausgang des Endverstärkers 21 ist dann die von Temperatureinflüssen bereinigte Ausgangsspannung $U_{out}$ abgreifbar. Wenn die Messspule 2 mit zwei zueinander komplementären Spannungen gespeist wird (symmetrisch zu dem Referenzpotential) und sich das Messobjekt 5 in der Mitte der Messspule 2 befindet, wird das Ausgangssignal gleich "0", der Wegmesssensor 1 funktioniert dann wie ein Differentialsensor (Null in der Mitte).

Mit Hilfe der hier dargestellten Schaltung kann außerdem noch auf dem Wege der Widerstandsbestimmung mit Hilfe des Bauteils 22 der Absolutwert der Temperatur ermittelt werden, was für bestimmte Anwendungen des erfindungsgemäßen Wegmesssensors 1 vorteilhaft sein kann.

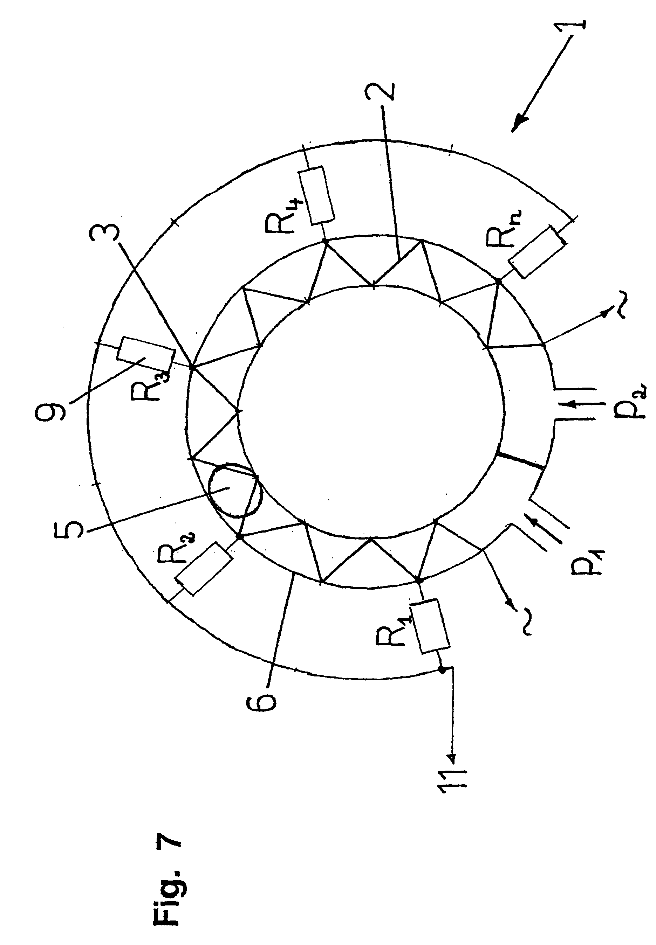

Fig. 7 zeigt eine spezielle Bauform des erfindungsgemäßen Wegmesssensors 1 mit einer Toroidspule als Messspule 2. Die Messspule 2 ist hier auf ein ringförmiges Spulenrohr 6 gewickelt, welches zwei Öffnungen zur Druckbeaufschlagung (p1 und p2) aufweist. Als Messobjekt dient hier eine Kugel 5, deren Position sich aufgrund der anliegenden Drücke p1 und p2 einstellt. Die Verschaltung der Spannungsabgriffe 3 kann hier entsprechend einer beliebigen der in den Fig. 1 bis 6 dargestellten Varianten erfolgen.

Hinsichtlich weiterer, in den Figuren nicht dargestellter vorteilhafter Varianten des erfindungsgemäßen Wegmesssensors wird auf den allgemeinen Teil der Beschreibung verwiesen.

**Patentansprüche**

1. Berührungslos arbeitender Wegmesssensor (1) mit einer mit Wechselstrom beaufschlagbaren Messspule (2), wobei die Messspule (2) mindestens zwei Spannungsabgriffe (3) aufweist, mit einem elektrisch und/oder magnetisch leitenden Messobjekt (5) und mit einer Auswerteschaltung (4) zum Auswerten und Ermitteln einer der Position des Messobjekts (5) in Bezug auf die Spannungsabgriffe (3) entsprechenden Ausgangsspannung, wobei das Messobjekt (5) im Inneren der Messspule (2) angeordnet und verschiebbar ist und die Gesamtimpedanz der Messspule (2) unabhängig von der Position des Messobjekts (5) ist, **dadurch gekennzeichnet, dass** Wechselstromquellen die Messspule (2) speisen und die Wechselstromquellen durch eine Wechselspannungsquelle und nachgeschaltete Widerstände ($R_1$ bis $R_n$) realisiert sind.

2. Wegmesssensor nach Anspruch 1, **dadurch gekennzeichnet, dass** die Messspule an den invertierenden und den' nicht invertierenden Eingang eines Differentialverstärkers (12) der Auswerteschaltung angeschlossen ist und mit Hilfe eines zwischengeschalteten Lastpotentiometers ($R_L$) der Nullpunkt am Ausgang des Differentialverstärkers (12) einstellbar ist, wenn sich das Messobjekt (5) in der Mitte der Messspule (2) befindet.

3. Wegmesssensor nach einem der Ansprüche 1 oder 2, **dadurch gekennzeichnet, dass** die Auswerteschaltung eine Ausgangsspannung ($U_{out}$) erzeugt, die sich bei Auslenkung des Messobjekts (5) aus der Mittellage proportional ändert, wobei sich die Phase um 180° ändert.

4. Wegmesssensor nach einem der Ansprüche 1 bis 3, **dadurch gekennzeichnet, dass** die Positionen der Spannungsabgriffe (3) so gewählt sind, dass bei Abwesenheit des Messobjekts (5) zwischen zwei benachbarten Spannungsabgriffen (3) immer im wesentlichen die gleiche Spannung abgreifbar ist.

5. Wegmesssensor nach einem der Ansprüche 1 bis 4, **dadurch gekennzeichnet, dass** sich das Messobjekt (5) maximal über den Abstand zwischen zwei benachbarten Spannungsabgriffen (3) erstreckt.

6. Wegmesssensor nach einem der Ansprüche 1 bis 5, **dadurch gekennzeichnet, dass** das Messobjekt (5) aus einem ferromagnetischen Werkstoff gebildet ist.

7. Wegmesssensor nach einem der Ansprüche 1 bis 6, **dadurch gekennzeichnet, dass** das Messobjekt (5) aus einem Werkstoff mit einem geringen spezifischen elektrischen Widerstand gebildet ist.

8. Wegmesssensor nach einem der Ansprüche 1 bis 7, **dadurch gekennzeichnet, dass** es sich bei der Messspule (2) um eine Langspule handelt, wobei es sich bei der Messspule (2) um eine Zylinderspule handeln kann.

9. Wegmesssensor nach einem der Ansprüche 1 bis 8, **dadurch gekennzeichnet, dass** die Messspule einen eckigen Querschnitt aufweist.

10. Wegmesssensor nach einem der Ansprüche 1 bis 9, **dadurch gekennzeichnet, dass** im Innern der Messspule (2) ein sich vorzugsweise über die gesamte Länge der Messspule (2) erstreckendes Spulenrohr (6) angeordnet ist und dass das Messobjekt (5) im Innern des Spulenrohres (6) angeordnet ist, wobei das Spulenrohr (6) aus einem nicht ferromagnetischen Werkstoff mit einem hohen spezifischen elektrischen Widerstand, aus rostfreiem Stahl, aus einem Kunststoff oder aus Glas gebildet sein kann.

11. Wegmesssensor nach einem der Ansprüche 1 bis 10, **dadurch gekennzeichnet, dass** ein die Messspule (6) und die Auswerteschaltung kapselndes und ggf. abschirmendes Gehäuse (7) vorgesehen ist.

12. Wegmesssensor nach einem der Ansprüche 1 bis 11, **dadurch gekennzeichnet, dass** die Messspule (6) symmetrisch mit zwei zueinander komplementären Spannungen gespeist wird.

13. Wegmesssensor nach einem der Ansprüche 1 bis 12, **dadurch gekennzeichnet, dass** die Messspule mit einer Rechteckspannung gespeist wird.

**14.** Wegmesssensor nach einem der Ansprüche 1 bis 13, wobei jeweils die Spannung zwischen zwei benachbarten Spannungsabgriffen (3) erfasst wird, **dadurch gekennzeichnet, dass** die Auswerteschaltung (4) Mittel zum Aufaddieren der erfassten Spannungswerte vorzugsweise in der Reihenfolge ihrer Anordnung und Mittel zum Aufaddieren der sich dabei ergebenden Zwischensummen zu der Ausgangsspannung umfasst.

**15.** Wegmesssensor nach einem der Ansprüche 1 bis 14, wobei jeweils die Spannung zwischen den einzelnen Spannungsabgriffen (3) und einem Referenzpotential (8) erfasst wird, **dadurch gekennzeichnet, dass** die Auswerteschaltung (4) Mittel (10) zum Aufaddieren der erfassten Spannungswerte zu der Ausgangsspannung umfasst.

**16.** Wegmessensor nach einem der Ansprüche 1 bis 15; **dadurch gekennzeichnet, dass** die Auswerteschaltung (4) als Mittel (10) zum Aufaddieren von Spannungswerten mindestens einen summierenden Verstärker umfasst, wobei der Verstärker (10) einen invertierenden und einen nicht invertierenden Eingang aufweisen kann.

**17.** Wegmesssensor nach einem der Ansprüche 1 bis 16, wobei die einzelnen Spannungsabgriffe (3) an einem gemeinsamen Messwertabgriff (11) zusammengeführt sind, an dem dann die Ausgangsspannung abgreifbar ist, **dadurch gekennzeichnet, dass** zwischen die einzelnen Spannungsabgriffe (3) und den Messwertabgriff (11) jeweils mindestens ein Widerstand (9) geschaltet ist, wobei die Widerstände (9) einen im wesentlichen identischen Nennwert oder unterschiedliche Nennwerte aufweisen und wobei der Nennwert um etwa zwei Ordnungen höher liegt als der Ausgangswiderstand der Messspule.

**18.** Wegmesssensor nach einem der Ansprüche 1 bis 17, **dadurch gekennzeichnet, dass** Mittel zur Kompensation von Temperatureinflüssen vorgesehen sind, wobei die Auswerteschaltung (4) Mittel (22) zur Temperaturerfassung und zum Berücksichtigen der Temperaturcharakteristik der Messspule (2) bei der Auswertung der erfassten Spannung umfasst.

**19.** Wegmesssensor nach Anspruch 18, **dadurch gekennzeichnet, dass** die Temperaturerfassung durch Ermittlung eines Gleichstrom- oder Wechselstromwiderstandes erfolgt.

**20.** Wegmesssensor nach Anspruch 18 oder 19, **dadurch gekennzeichnet, dass** die Auswerteschaltung (4) Mittel zum Separieren und getrennten Verarbeiten der Wechselspannungs- und der Gleichspannungskomponente der erfassten Spannung und Mittel zum Eliminieren des Temperatureinflusses auf die Wechselstromkomponente umfasst, wobei die Auswerteschaltung (4) als Mittel zum Separieren und Verarbeiten der Wechselspannungs- und der Gleichspannungskomponente jeweils mindestens einen Filter (17, 20) umfasst und wobei zur Verarbeitung der Wechselstromkomponente zusätzlich ein Demodulator (19) vorgesehen ist und/ oder wobei die Auswerteschaltung (4) als Mittel zum Eliminieren des Temperatureinflusses auf die Wechselstromkomponente einen Differentialverstärker (21) umfasst und die demodulierte, gefilterte und ggf. verstärkte Wechselstromkomponente an einen Eingang des Differentialverstärkers (21) geführt ist und die gefilterte und ggf. verstärkte Gleichstromkomponente an den anderen Eingang des Differentialverstärkers (21) geführt ist.

**21.** Wegmesssensor nach einem der Ansprüche 1 bis 20, **dadurch gekennzeichnet, dass** die Messspule in Form einer Reihenschaltung einzelner, mindestens eine Spulenwindung umfassender Abschnitte realisiert ist und dass die einzelnen Abschnitte der Messspule jeweils von einer Wechselstromquelle gespeist werden.

## Claims

**1.** Non-contact position sensor (1) comprising a measuring coil (2) to which alternating current can be applied, the measuring coil (2) having at least two voltage taps (3), and comprising an electrically and/or magnetically conductive measurement object (5) and an evaluation circuit (4) for evaluating and determining an output voltage corresponding to the position of the measurement object (5) in relation to the voltage taps (3), the measurement object (5) being arranged and being displaceable inside the measuring coil (2) and the overall impedance of the measuring coil (2) being independent of the position of the measurement object (5), **characterised in that** a.c. power sources supply the measuring coil (2) and the a.c. power sources are implemented by an a.c. voltage source and resistors ($R_1$ to $R_n$) connected downstream.

**2.** Position sensor according to claim 1, **characterised in that** the measuring coil is connected to the inverting and the non-inverting input of a differential amplifier (12) of the evaluation circuit and, by means of an interposed load potentiometer ($R_L$), the zero point at the output of the differential amplifier (12) can be set when the measurement object (5) is at the middle of the measuring coil (2).

3. Position sensor according to either claim 1 or claim 2, **characterised in that** the evaluation circuit produces an output voltage ($U_{out}$) that changes proportionally as the measurement object (5) deviates from the middle position, the phase changing by 180°.

4. Position sensor according to any one of claims 1 to 3, **characterised in that** the positions of the voltage taps (3) are so selected that, in the absence of the measurement object (5) between two adjacent voltage taps (3), substantially the same voltage can always be tapped.

5. Position sensor according to any one of claims 1 to 4, **characterised in that** the measurement object (5) extends over not more than the distance between two adjacent voltage taps (3).

6. Position sensor according to any one of claims 1 to 5, **characterised in that** the measurement object (5) is formed from a ferromagnetic material.

7. Position sensor according to any one of claims 1 to 6, **characterised in that** the measurement object (5) is formed from a material having a low resistivity.

8. Position sensor according to any one of claims 1 to 7, **characterised in that** the measuring coil (2) is a long coil, it being possible for the measuring coil (2) to be a cylindrical coil.

9. Position sensor according to any one of claims 1 to 8, **characterised in that** the measuring coil has an angular cross-section.

10. Position sensor according to any one of claims 1 to 9, **characterised in that** a coil tube (6) that preferably extends over the entire length of the measuring coil (2) is arranged inside the measuring coil (2) and the measurement object (5) is arranged inside the coil tube (6), it being possible for the coil tube (6) to be formed from a non-ferromagnetic material having a high resistivity, stainless steel, a plastics material or glass.

11. Position sensor according to any one of claims 1 to 10, **characterised in that** a housing (7) that encapsulates and, where applicable, shields the measuring coil (6) and the evaluation circuit is provided.

12. Position sensor according to any one of claims 1 to 11, **characterised in that** the measuring coil (6) is supplied symmetrically with two voltages that are complementary to each other.

13. Position sensor according to any one of claims 1 to 12, **characterised in that** the measuring coil is supplied with a square-wave voltage.

14. Position sensor according to any one of claims 1 to 13, wherein the voltage between two adjacent voltage taps (3) is detected in each case, **characterised in that** the evaluation circuit (4) comprises means for adding up the detected voltage values preferably in the order of their arrangement and means for adding up the resulting sub-totals to form the output voltage.

15. Position sensor according to any one of claims 1 to 14, wherein the voltage between the individual voltage taps (3) and a reference potential (8) is detected in each case, **characterised in that** the evaluation circuit (4) comprises means (10) for adding up the detected voltage values to form the output voltage.

16. Position sensor according to any one of claims 1 to 15, **characterised in that** the evaluation circuit (4) comprises as means (10) for adding up the voltage values at least one summing amplifier, it being possible for the amplifier (10) to have an inverting and a non-inverting input.

17. Position sensor according to any one of claims 1 to 16, wherein the individual voltage taps (3) are combined at a common measured value tap (11) at which the output voltage can then be tapped, **characterised in that** at least one resistor (9) is connected between each individual voltage tap (3) and the measured value tap (11), the resistors (9) having a substantially identical rating or different ratings and the rating being approximately two orders greater than the output resistance of the measuring coil.

18. Position sensor according to any one of claims 1 to 17, **characterised in that** means for compensating for temperature effects are provided, the evaluation circuit (4) comprising means (22) for detecting temperature and for taking the temperature characteristic of the measuring coil (2) into account when evaluating the detected voltage.

19. Position sensor according to claim 18, **characterised in that** the temperature is detected by determining a d.c. resistance or an a.c. resistance.

20. Position sensor according to claim 18 or 19, **characterised in that** the evaluation circuit (4) has means for separating and separately processing the a.c. voltage component and the d.c. voltage component of the detected voltage and means for eliminating the effect of temperature on the a.c. component, the evaluation circuit (4) comprising as means for separating and processing the a.c. voltage component and the d.c. voltage component at least one filter (17, 20) in each case and a demodulator (19) additionally being provided for processing the a.c. component and/or the evaluation circuit (4) comprising as means for eliminating the effect of temperature on the a.c. component a differential amplifier (21) and the demodulated, filtered and, where applicable, amplified a.c. component being fed to one input of the differential amplifier (21) and the filtered and, where applicable, amplified d.c. component being fed to the other input of the differential amplifier (21).

**21.** Position sensor according to any one of claims 1 to 20, **characterised in that** the measuring coil is implemented in the form of a series connection of individual sections that comprise at least one coil winding and the individual sections of the measuring coil are each supplied by an a.c. power source.

**Revendications**

**1.** Capteur de mesure de déplacement (1) travaillant sans contact, avec une bobine de mesure (2) pouvant être soumise à un courant alternatif, la bobine de mesure (2) présentant au moins deux prises de tension (3), avec un objet de mesure (5) électriquement et/ou magnétiquement conducteur et avec un circuit d'évaluation (4) pour évaluer et déterminer une tension de sortie correspondant à la position de l'objet de mesure (5) par rapport aux prises de tension (3), l'objet de mesure (5) étant disposé et coulissant dans l'intérieur de la bobine de mesure (2) et l'impédance totale de la bobine de mesure (2) étant indépendante de la position de l'objet de mesure (5),
**caractérisé en ce que** des sources de courant alternatif alimentent la bobine de mesure (2) et les sources de courant alternatif sont réalisées par une source de tension alternative et des résistances ($R_1$ à $R_n$) intercalées à la suite.

**2.** Capteur de mesure de déplacement selon la revendication 1,
**caractérisé en ce que** la bobine de mesure est connectée à l'entrée inversante et à l'entrée non inversante d'un amplificateur différentiel (12) du circuit d'évaluation et le point zéro à la sortie de l'amplificateur différentiel (12) peut être réglé à l'aide d'un potentiomètre de charge ($R_L$) intercalé lorsque l'objet de mesure (5) se trouve au milieu de la bobine de mesure (2).

**3.** Capteur de mesure de déplacement selon l'une des revendications 1 et 2,
**caractérisé en ce que** le circuit d'évaluation engendre une tension de sortie ($U_{out}$) qui varie proportionnellement lors d'une excursion de l'objet de mesure (5) hors de la position médiane, la phase changeant de 180°.

**4.** Capteur de mesure de déplacement selon l'une des revendications 1 à 3,
**caractérisé en ce que** les positions des prises de tension (3) sont choisies de telle manière que, dans le cas d'une absence de l'objet de mesure (5) entre deux prises de tension (3) adjacentes, toujours essentiellement la même tension peut être prélevée.

**5.** Capteur de mesure de déplacement selon l'une des revendications 1 à 4,
**caractérisé en ce que** l'objet de mesure (5) s'étend au maximum sur la distance entre deux prises de tension (3) adjacentes.

**6.** Capteur de mesure de déplacement selon l'une des revendications 1 à 5,
**caractérisé en ce que** l'objet de mesure (5) est formé en un matériau ferromagnétique.

**7.** Capteur de mesure de déplacement selon l'une des revendications 1 à 6,
**caractérisé en ce que** l'objet de mesure (5) est formé en un matériau à faible résistance électrique spécifique.

**8.** Capteur de mesure de déplacement selon l'une des revendications 1 à 7,
**caractérisé en ce qu'**il s'agit, pour la bobine de mesure (2), d'une bobine longue, cependant qu'il peut s'agir d'une bobine cylindrique pour la bobine de mesure (2).

**9.** Capteur de mesure de déplacement selon l'une des revendications 1 à 8,
**caractérisé en ce que** la bobine de mesure présente une section transversale polygonale.

**10.** Capteur de mesure de déplacement selon l'une des revendications 1 à 9,
**caractérisé en ce qu'**un tube de bobine (6), s'étendant de préférence sur toute la longueur de la bobine de mesure (2), est disposé dans l'intérieur de la bobine de mesure (2) et que l'objet de mesure (5) est disposé dans l'intérieur du tube de bobine (6), le tube de bobine (6) pouvant être formé en un matériau à haute résistance électrique spécifique, en acier inoxydable, en une matière synthétique ou en verre.

**11.** Capteur de mesure de déplacement selon l'une des revendications 1 à 10,
**caractérisé en ce qu'**il comprend un boîtier (7) encapsulant et le cas échéant blindant la bobine de mesure (2) et le circuit d'évaluation.

**12.** Capteur de mesure de déplacement selon l'une des revendications 1 à 11,
**caractérisé en ce que** la bobine de mesure (2) est alimentée symétriquement par deux tensions complémentaires l'une à l'autre.

**13.** Capteur de mesure de déplacement selon l'une des revendications 1 à 12,
**caractérisé en ce que** la bobine de mesure (2) est alimentée par une tension rectangulaire.

**14.** Capteur de mesure de déplacement selon l'une des revendications 1 à 13, la tension étant détectée respectivement entre deux prises de tension (3) adjacentes,
**caractérisé en ce que** le circuit d'évaluation (4) comprend des moyens pour additionner les valeurs de tension détectées, de préférence dans la succession de leur disposition, et des moyens pour additionner à la tension de sortie les sommes intermédiaires ainsi obtenues.

**15.** Capteur de mesure de déplacement selon l'une des revendications 1 à 14, la tension étant détectée respectivement entre les prises de tension (3) individuelles et un potentiel de référence (8),
**caractérisé en ce que** le circuit d'évaluation (4) comprend des moyens (10) pour additionner à la tension de sortie les valeurs de tension détectées.

**16.** Capteur de mesure de déplacement selon l'une des revendications 1 à 15,
**caractérisé en ce que** le circuit d'évaluation (4) comprend, en tant que moyens (10) pour additionner des valeurs de tension, au moins un amplificateur additif, l'amplificateur (10) pouvant présenter une entrée inversante et une entrée non inversante.

**17.** Capteur de mesure de déplacement selon l'une des revendications 1 à 16, les prises de tension (3) individuelles étant réunies à une prise de valeur de mesure (11) commune à laquelle la tension de sortie peut ensuite être prélevée,
**caractérisé en ce qu'**au moins une résistance (9) est montée respectivement entre les prises de courant (3) individuelles et la prise de valeur de mesure (11), les résistances (9) présentant une valeur nominale sensiblement identique ou des valeurs nominales différentes et la valeur nominale étant plus élevée d'environ deux ordres que la résistance de sortie de la bobine de mesure.

**18.** Capteur de mesure de déplacement selon l'une des revendications 1 à 17,
**caractérisé en ce que** sont prévus des moyens pour compenser les influences de la température, le circuit d'évaluation (4) comprenant des moyens (22) pour détecter la température et pour prendre en compte la caractéristique de température de la bobine de mesure (2) lors de l'évaluation de la tension détectée.

**19.** Capteur de mesure de déplacement selon la revendication 18,
**caractérisé en ce que** la détection de la température est effectuée par la détermination d'une résistance en courant continu ou en courant alternatif.

**20.** Capteur de mesure de déplacement selon la revendication 18 ou 19,
**caractérisé en ce que** le circuit d'évaluation (4) comprend des moyens pour la séparation et le traitement séparé des composantes de tension alternative et des composantes de tension continue de la tension détectée et des moyens pour l'élimination de l'influence de la température sur les composantes de courant alternatif, le circuit d'évaluation (4) comprenant, en tant que moyens pour la séparation et le traitement séparé des composantes de tension alternative et des composantes de tension continue, respectivement au moins un filtre (17, 20) et un démodulateur (19) étant prévu pour le traitement des composantes de courant alternatif et/ou le circuit d'évaluation (4) comprenant, en tant que moyens pour l'élimination de l'influence de la température sur les composantes de courant alternatif, un amplificateur différentiel (21) et les composantes de courant alternatif démodulées, filtrées et le cas échéant amplifiées étant envoyées à une entrée de l'amplificateur différentiel (21) et les composantes de courant continu filtrées et le cas échéant amplifiées étant envoyées à l'autre entrée de l'amplificateur différentiel (21).

**21.** Capteur de mesure de déplacement selon l'une des revendications 1 à 20,
**caractérisé en ce que** la bobine de mesure est réalisée sous forme d'un montage série de sections individuelles comprenant au moins une spire de bobine et que les sections individuelles de la bobine de mesure sont alimentées respectivement par une source de courant alternatif.

**Fig. 1**

Fig. 2

**Fig. 3**

Fig. 4

Fig. 5

Fig. 6

EP 0 916 075 B1

**Fig. 7**

EP 0 916 075 B1